# EUROPÄISCHE PATENTSCHRIFT

(11) **EP 2 870 993 B1**
(45) Veröffentlichungstag und Bekanntmachung des Hinweises auf die Patenterteilung: **29.06.2016**
(21) Anmeldenummer: 13005296.2
(22) Anmeldetag: 11.11.2013
(51) Int. Cl.: B01D 63/08, B01D 63/10

(54) **Verfahren zum Filtern und Trennen von Strömungsmedien mittels Membranen**
Method for filtering and separating flow media using membranes
Procédé de filtration et de séparation de fluides d'écoulement au moyen de membranes

(43) Veröffentlichungstag der Anmeldung: 13.05.2015
(60) Teilanmeldung: 14004217.7
(73) Patentinhaber: R.T.S. ROCHEM Technical Services GmbH, 21077 Hamburg (DE)
(72) Erfinder: Heine, Wilhelm, 21077 Hamburg (DE)
(74) Vertreter: Niedmers, Ole

(56) Entgegenhaltungen:
- EP-A1- 2 008 705
- EP-A1- 2 156 882
- WO-A1-98/30316
- WO-A1-2009/136165
- WO-A1-2012/057902
- WO-A2-2004/080577
- DE-A1-102010 027 689
- DE-U1- 20 106 646
- US-A- 4 892 657
- US-A1- 2013 256 211

## Beschreibung

Die Erfindung betrifft ein Verfahren zum Filtern und Trennen von Strömungsmedien mittels Membranen, umfassend ein im wesentlichen druckdichtes Gehäuse, in dem eine Mehrzahl von Membranen angeordnet ist, wenigstens einen Einlaß für das in die Vorrichtung geführte zu trennende Strömungsmedium und wenigstens einen Auslaß für das aus der Vorrichtung herausgeführte Permeat sowie das herausgeführte Retentat, wobei die Membranen nach Art von Membrankissen ausgebildet sind, die einen Öffnungsbereich zum Austritt des sich in dem Membraninnenraum sammelnden Permeats aufweisen.

Ein Verfahren bzw. eine Vorrichtung, mit der ein solches Verfahren ausgeführt werden kann, ist beispielsweise in der EP-A-1 445 013 beschrieben, wobei dort die Vorrichtung im Zusammenhang mit in Form einer sog. Wickelmem-_{.} bran ausgebildeten eigentlichen Trenneinheit ausgebildet ist, die in einem druckdichten Gehäuse aufnehmbar ist.

Die dort verwendeten Membranelemente, die regelmäßig in Form sog. Membrankissen ausgebildet sind, die in der Fachwelt auch als Kissenmembran oder Membrantaschen bezeichnet werden, sind dem jeweiligen Trennzweck in bezug auf das zu trennende Medium auch in bezug auf seine Größe (Membranfläche) angepaßt, wobei die stoffselektiven eigentlichen Membranen, die die Membrankissen bilden, ebenfalls spezifisch für den Trennzweck des zu trennenden Mediums ausgewählt werden.

Man unterscheidet bei den druckbetriebenen Trenntechniken Filtration, Ultrafiltration, Nanofiltration und Umkehrosmose. Diese druckbetriebenen Trenntechniken überlappen sich teilweise, so daß eine strenge Trennung von der Fachwelt nur theoretisch im Hinblick auf den physikalischen Wirkmechanismus der in einer Membran stattfindenden Stofftrennung betrachtet wird. Dennoch wird die vorgenannte grobe Einteilung, siehe "Membrantrennverfahren, Ultrafiltration und Umkehrosmose, Robert Rautenbach, Verlag Salle + Sauerländer, 1981", regelmäßig verwendet.

Die Stofftrennung mittels Membranen hat in nahezu allen Bereichen der gewerblichen Wirtschaft Einzug genommen und reicht z.B. von der Stofftrennung auf marinen Einrichtungen wie Schiffen und Bohrplattformen, die auf See eingesetzt werden bzw. verankert sind, bis in den Bereich der Meerwasserentsalzung zur Erzeugung von Brauch-und Süßwasser und z.B. der Trennung von Sickerwasser, wie es auf Mülldeponien, aber auch im Bereich der gewerblichen und kommunalen Abwasserentsorgung anfällt.

Viele dieser flüssigen Strömungsmedien setzen sich aus einem vielfältigen Gemisch unterschiedlicher flüssiger Bestandteile, teilweise sogar mit gasförmigen Bestandteilen vermischt, zusammen, für die bisher für jedes gewünschte Trennprodukt nach Durchlaufen eines Trennverfahrens eine Vorrichtung, mit der ein Trennverfahren ausgeführt werden kann, bzw. eine produktspezifische Trenneinrichtung bereitgestellt werden muß. Das erfordert, wie leicht erkennbar ist, einen hohen apparativen Aufwand und darüber hinaus auch aufwendige Steuerungen der Verfahren, die zur Trennung eines komplexen Stoffgemisches herangezogen werden müssen bzw. durchgeführt werden müssen. Viele der zu trennenden Stoffe aus einem Stoffgemisch müssen mit unterschiedlichen Trennmechanismen im Sinne der oben beschriebenen Einteilung aus einem zu trennenden Stoffgemisch herausgetrennt werden, da eine bestimmte Trennmethode für bestimmte Stoffe aus den zu trennenden Stoffgemischen nicht geeignet ist und nur eine andere Methode zum Erfolg führt. Selbst unterschiedliche Stoffe in einem Stoffgemisch, die zur chemisch/physikalisch gleichen Stoffgruppe gehören, lassen sich bisweilen nur mittels der einen Methode der Stofftrennung, nicht aber mittels einer anderen Methode der Stofftrennung aus dem Gesamtgemisch, das zu trennen ist, separieren.

Hinzu kommt, wie oben schon angedeutet, daß bisher bei komplex zusammengesetzten Strömungsmedien eine Trennung der Zwischenprodukte wiederum durch erneutes Durchführen durch Vorrichtungen nacheinander erreicht werden kann, die jeweils auf das zu trennen gewünschte Produkt abgestellt sind. Das erfordert neben dem schon erwähnten hohen apparativen Aufwand auch sehr viel Zeit und erfordert einen hohen Energieaufwand.

Die DE 10 2010 027 689 offenbarf Wickel und Stapelmodule mit Membranen unterschiedliches Trembereiche.

Die EP2 008 705 und EP2156882 offenbaren Wickelmodule mit unterschiedlichen permeatseitigen Druckbereichen.

Es ist die Aufgabe der Erfindung, ein Verfahren zu schaffen, mit dem verschiedene Produkte aus einem komplexen zu trennenden Stoffgemisch in einem Verfahrensgang getrennt werden können, die jeweils nur unterschiedlichen Trennmechanismen zugänglich sind, wobei das Verfahren einen geringen apparativen Aufwand im Vergleich zu bisherigen Trenneinrichtungen erfordert und ein Umbau beispielsweise einer Vorrichtung, mit der ein derartiges Verfahren ausgeführt werden können soll, nicht erforderlich ist, so daß das Verfahren schnell und kostengünstig durchgeführt werden kann.

Gelöst wird die Aufgabe gemäß der erfindungsgemäßen Lösung dadurch, daß bei dem Membranstapel eine jeweilige Menge von Membranen unterschiedlicher Trennbereiche mit jeweils vorbestimmtem, unterschiedlichem Vakuum des zu trennenden Mediums betrieben werden kann.

Die erfindungsgemäße Lösung ermöglicht es auch, beispielsweise Stoffe aus komplexen Stoffgemischen zu trennen, die nur mittels Membranen durchgeführt werden können, die z.B. nach der Methode der Pervaporation arbeiten.

Der Vorteil der erfindungsgemäßen Lösungen im Hinblick auf die jeweiligen Trennverfahren liegt darin, daß, wie aufgabengemäß angestrebt, quasi in einem Verfahrensschritt, bedingt durch die ausgewählten unterschiedlichen Trennbereiche der einzelnen Teilmengen der Menge aller beaufschlagten Membranelemente, eine selektive Stofftrennung möglich ist, d.h. selektiv für das jeweils gewünschte Produkt aus dem zu trennenden Stoffgemisch. Dadurch kann das bisher nötige vielfach anzuwendende Trennverfahren im Prinzip auf ein Trennverfahren reduziert werden. Das ist, wie angestrebt, nicht nur ein erheblicher apparativer Vorteil, sondern auch ein Vorteil, der sich in der Ersparnis von Zeit und Kosten niederschlägt.

Der Vorteil wire wird bei der vorgeschlagenen erfindungsgemäßen Lösung erreicht, bei der der Stofftrennprozeß mittels Unterdruck (Vakuum) erfolgt, d.h. mittels der Methode, bei der eine Trennung von bestimmten Stoffgemischen nur mittels Unterdruck auf der Permeatseite eines Membranelementes möglich ist.

Eine vorbestimmbare Teilmenge der Menge der Membranen des Membranstapels wird mit unterschiedlich hohem Vakuum im Hinblick auf das zu trennende Medium beaufschlagt.

Die Erfindung wird nun unter Bezugnahme auf die nachfolgenden schematischen Zeichnungen anhand eines ersten Ausführungsbeispieles eingehend beschrieben, wobei ein zweites Ausführungsbeispiel nur in bezug auf seine Abwandlungen zum ersten Beispiel kurz erläutert wird.

Darin zeigen:
- Fig. 1: im Schnitt eine Vorrichtung, zur Ausführung des Verfahrens,
- Fig. 2: im Schnitt den Teil der Vorrichtung gemäß Fig. 1, der aus den aus Kissenmembranen und Abstandselementen bestehenden Spirale besteht, die auf einem Rohrelement aufeinandergewickelt sind und auf die die die Vorrichtung im wesentlichen durchquerende bolzenförmige Permeatablauf- und Sammeleinrichtung aufgeschoben werden kann,
- Fig. 3: einen Schnitt durch die Spiralen gemäß der Linie C-D gemäß Fig. 2, jedoch mit gegenüber der Fig. 2 in den Innenraum des Rohrelementes eingesetzter Permeatablauf- und Sammeleinrichtung in gegenüber Fig. 2 vergrößertem Maßstab sowie noch nicht aufeinandergewickelten Membrankissen und zwischen den Membrankissen angeordneten Abstandselementen, zur Erläuterung des Aufbaus der Erfindung,
- Fig. 4a: einen Ausschnitt des Abstandselements im Schnitt in stark vergrößertem Maßstab in der Seitenansicht,
- Fig. 4b: das Abstandselement in stark vergrößertem Maßstab in der Draufsicht,
- Fig. 5: das im Zusammenhang mit der Vorrichtung zur Ausführung des Verfahrens verwendete Membrankissen mit einem einseitigen Bereich, der die Permeatablauföffnung bildet,
- Fig. 6: einen Ausschnitt eines Schnittes entlang der Linie A-B von Fig. 5. den Aufbau eines Membrankissens mit Zwischenelement zeigend,
- Fig. 7: einen Ausschnitt eines Schnittes entlang der Linie E-F von Fig. 5, den Aufbau eines Membrankissens zeigend, das kein Zwischenelement aufweist,
- Fig. 8: in der Draufsicht ein Abstandselement, wie es bei Trennvorrichtungen zur Ausführung des Verfahrens verwendet wird, die nach Art eines im wesentlichen zylindrischen Membranstapels ausgebildet sind, bei dem sich die Menge aller Abstandselemente mit der Menge aller Membrankissen abwechseln (2. Variante der Vorrichtung zur Ausführung des Verfahrens) in der Draufsicht, mit angedeutetem Membrankissen, und
- Fig. 9: in der Seitenansicht das Abstandselement von Fig. 8 im Schnitt unter Weglassung für das Verständnis der Vorrichtung zur Ausführung des Verfahrens nicht nötiger Details.

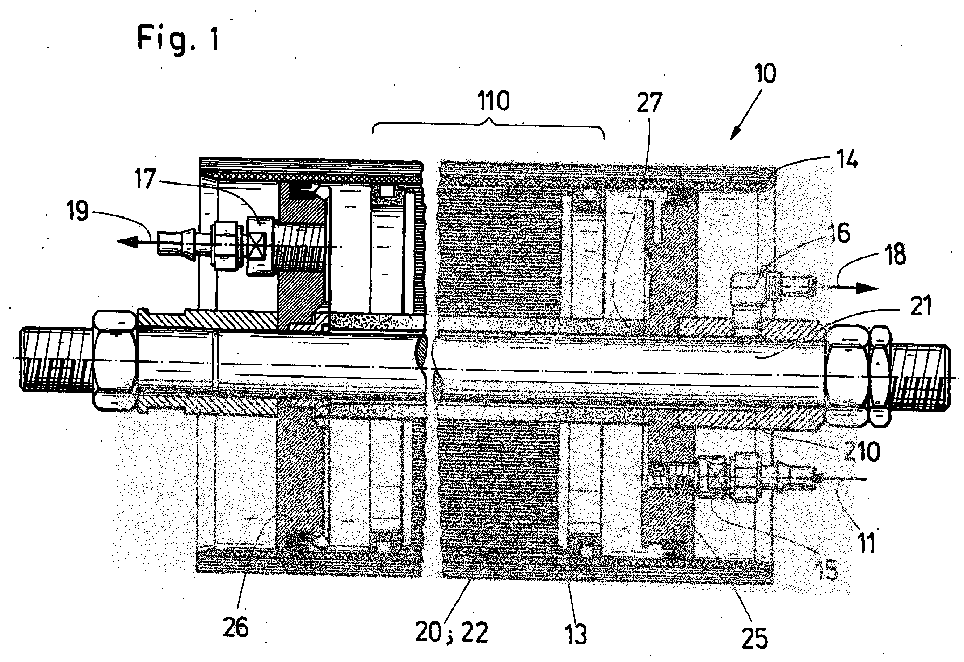

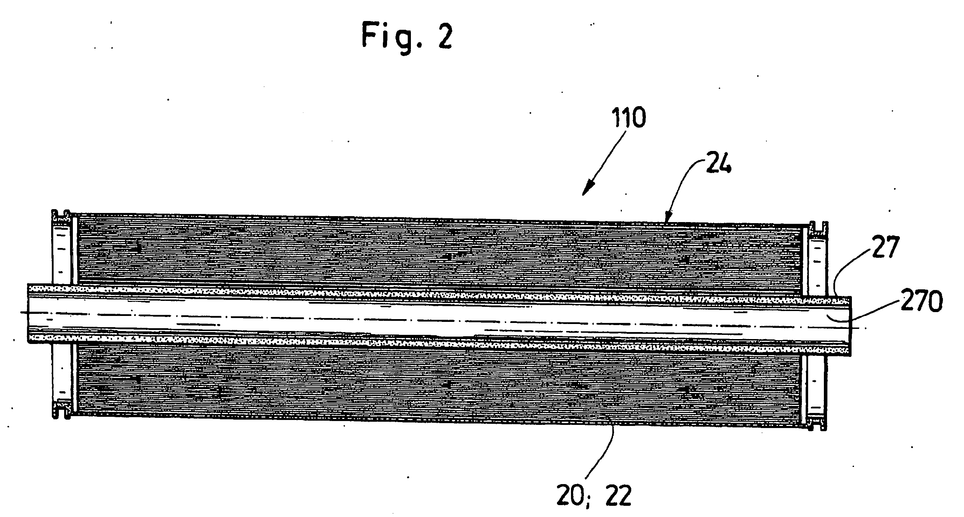

Bezüglich des Aufbaus der Vorrichtung 10, mit der das Verfahren ausgeführt werden kann, wird zunächst auf die Fig. 1 und 2 Bezug genommen. Die Vorrichtung 10 umfaßt ein druckdichtes Gehäuse 14, das hier in den Fig. als rohrzylinderförmiges Element ausgebildet ist. Im wesentlichen axial zum Gehäuse 14 ist eine die Vorrichtung 10 im wesentlichen durchquerende Permeatablauf- und Sammeleinrichtung 21 vorgesehen, die zusätzlich auch die Funktion eines Spannbolzens aufweist, der eine Trenneinheit 110 trägt bzw. zusammenhält, worauf noch weiter unten im einzelnen eingegangen wird.

Ein Teil der Trenneinheit 110 ist in Fig. 2 dargestellt, wobei diese Trenneinheit neben der die Vorrichtung 10 bolzenartig durchquerenden Permeatablauf- und Sammeleinrichtung 21 Abschlußelemente 25, 26 aufweist, die in Fig. 2 aus Übersichtlichkeitsgründen nicht dargestellt sind.

Auf der Permeatablauf- und Sammeleinrichtung 21 befindet sich ein gesondertes Rohrelement 27, das aufgeschoben werden kann, das aber von der Permeatablauf- und Sammeleinrichtung 21 auch abgezogen werden kann.

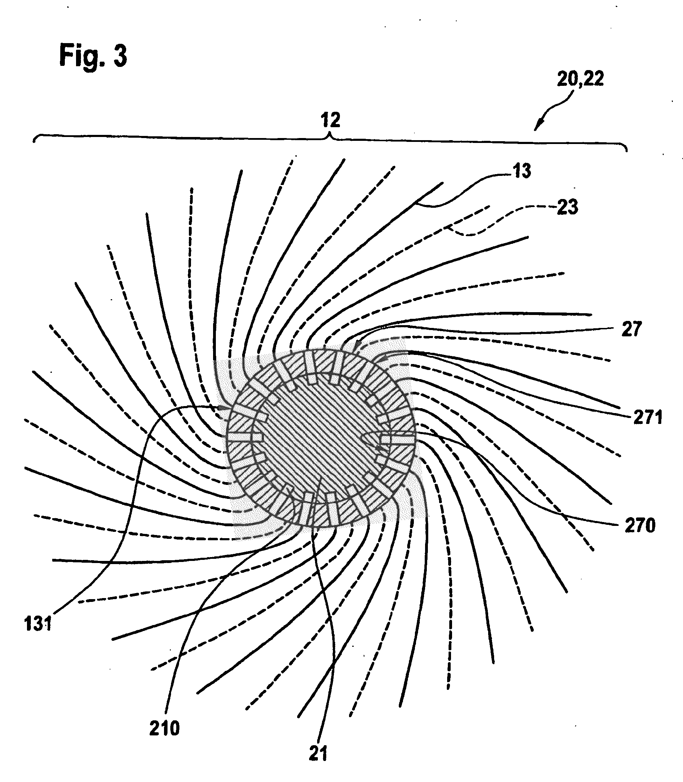

Auf dem gesonderten Rohrelement 27, das die Vorrichtung 10 ebenfalls im wesentlichen durchquert, und in seiner axialen Länge geringfügig kleiner als die axiale Länge des Gehäuses 14 ist, ist eine Mehrzahl von Membranen, die nach Art von Membrankissen 13 ausgebildet sind, nach Art einer mehrelementigen bzw. mehrlagigen Spirale 20 aufeinandergewickelt, vgl. auch Fig. 3. In den Fig. 1 und 2 ist die mehrelementige Spirale 20 in ihrem endgültigen, aufeinandergewickelten Zustand dargestellt.

Die Menge aller Membranelemente gemäß den Fig. 1 und 2 bildet einen Membranstapel 12, wie er in Fig. 3 dargestellt ist und wie er weiter unten im einzelnen beschrieben wird. Die den Membranstapel 12 bildenden Membrankissen 13 werden für unterschiedliche Trennbereiche im Hinblick auf das zu trennende Strömungsmedium 11 ausgebildet. D.h., daß ein Teil des Membranstapels 12 aus Membranelementen 13 gebildet wird, die beispielsweise für die Umkehrosmose, beispielsweise für die Nanofiltration, beispielsweise für die Ultrafiltration oder aber auch für eine normale Filtration oder auch für die Stofftrennung nach der Methode der Pervaporation ausgebildet sind.

Bestimmte Teilmengen der Menge der den Membranstapel 12 bildenden Membrankissen 13 können im vorbeschriebenen Sinne zur Bildung des Membranstapels 12 verwendet werden.

Es ist auch möglich, beispielsweise eine Stofftrennung bei geeignet ausgebildeten Membrankissen 13 mittels der vakuumgestützten Methode der Pervaporation auszuführen. Alle Kombinationen von verschiedenen Trennbereichen der Strömungsmedien 11 sind möglich und können den spiralförmig aufgebauten Membranstapel 12 bilden.

Die Darstellung von Fig. 3, die einen Schnitt durch die Fig. 2 entlang der Linie C-D von Fig. 2, jedoch in einem größeren Maßstab, zeigt, anders als in Fig. 2 dargestellt, die in das Rohrelement 27 in dessen Innenbohrung 270 eingesetzte Permeatablauf- und Sammeleinrichtung 21 in nicht aufeinandergewickeltem Zustand mehrelementige Spirale 20 aus einzelnen Membrankissen 13. Die in Fig. 3 dargestellten Membrankissen, dargestellt als durchgehende Linie, sind nicht maßstabsgerecht dargestellt. Bei einer realisierten Ausführungsform haben die Membrankissen bspw. eine Breite von 950 mm und eine Länge von 755 mm, wobei die Länge die effektive Länge des Membrankissens 13 in Richtung des Rohrelements 27 ist. Die vorherigen Breiten- und Längenangaben bezüglich der Membrankissen beziehen sich lediglich auf ein mögliches Ausführungsbeispiel, es können aber in bezug auf die unterschiedliche Ausgestaltung der Vorrichtung 10 auch völlig andere Breiten und Längen der Membrankissen 13 vorgesehen werden.

Bei dem in Fig. 3 dargestellten Ausführungsbeispiel besteht die mehrelementige Spirale 20 aus 18 Membrankissen 13, wobei auch in diesem Falle darauf hinzuweisen ist, daß auch eine andere Anzahl von Membrankissen 13 die Spirale 20 bilden können.

Je nach gewünschter Einsatzart wird die jeweilige Teilmenge der Menge der Membrankissen 13, die den Membranstapel 12 bilden, gewählt und können somit im Vorwege im Hinblick auf eine angestrebte Stofftrennung komplex zusammengesetzter Strömungsmedien 11 im Vorwege zusammengestellt werden, d.h. auch nach dem qualitativ und quantitativ zu erreichen gewünschten Trenngrad und dem gewünschten Trennergebnis insgesamt.

Es sei ebenfalls darauf hingewiesen, daß die Darstellung von Fig. 3 lediglich schematisch für das bessere Verständnis der Vorrichtung 10 zu verstehen ist. Deshalb sind die einzelnen, die mehrelementige Spirale 20 bildenden Membrankissen 13 hier auch in einer quasi auseinandergezogenen Darstellung dargestellt.

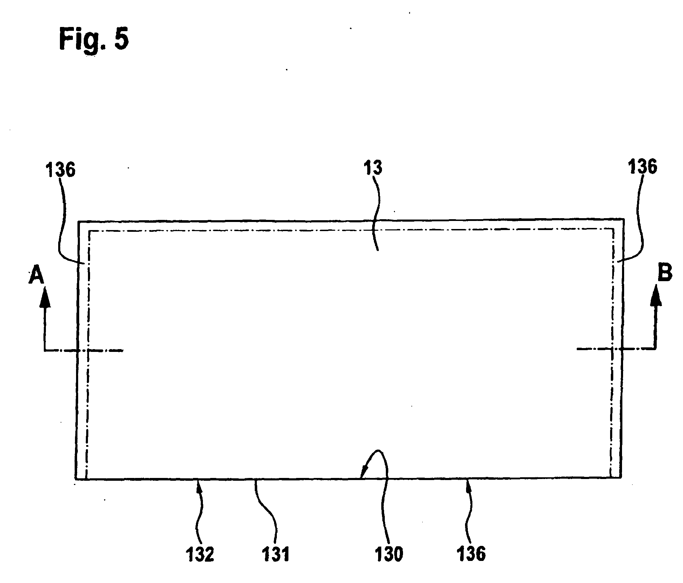

Die Membrankissen 13 haben einen Aufbau, wie er in den Fig. 5, 6 und 7 dargestellt ist, worauf noch weiter unten im einzelnen eingegangen wird. Im endgültig aufeinandergewickelten Zustand der mehrelementigen Spirale 20 nimmt die Spirale 20 eine Form an, wie sie in den Fig. 1 und 2 in der Seitenansicht im Schnitt dargestellt ist.

Die Membrankissen 13 der mehrelementige Spirale 20 sind relativ zu dem Rohrelement 27 mit ihren Permeatablauföffnungen 131 derart angeordnet, daß die Permeatablaufbereiche bzw. -öffnungen 131 auf die radialen Löcher 271 gerichtet sind bzw. in diese münden, die in in dem Rohrelement 27 ausgebildet sind, vgl. wiederum Fig. 3. So ist es möglich, daß das aus den Permeatablauföffnungen der Membranen 13 austretende Permeat 18 in die radialen Löcher 271 eintreten kann und durch diese hindurch in die in der Innenbohrung 270 des Rohrelements 27 positionierten Permeateinlauföffnungen 210 der Permeatablauf- und Sammeleinrichtung 21 eintreten können und von dort, da die Permeateinlauföffnungen 210 in Form axialer Nuten, die auf der Permeatablauf- und Sammeleinrichtung 21 ausgebildet sind, zu einem an einem Ende der Permeatablauf- und Sammeleinrichtung 21 ausgebildeten Ringkanal geführt werden kann und von dort über einen Permeatauslaß 16 nach außen.

Es ist aber auch möglich, anstelle gesonderter nutförmiger Permeateinlauföffnungen 210 zwischen der Innenbohrung 270 des Rohrelements 27 und der die Vorrichtung 10 im wesentlichen durchquerenden bolzenförmigen Permeatablauf- und Sammeleinrichtung 21 einen ringförmigen Kanal vorzusehen, durch den dann das Permeat 18 zum Permeatauslaß 16 geführt wird.

Bei dem hier beschriebenen Ausführungsbeispiel der Vorrichtung 10 sind entsprechend der achtzehn Membrankissen 13 achtzehn radiale Löcher 271 im Rohrelement 27 vorgesehen. Längs des gesonderten Rohrelements 27 ist entsprechend der Länge der Membrankissen 13 eine Mehrzahl von radialen Löchern 271, in axialer Richtung reihenartig angeordnet, vorgesehen, um einen möglichst gleichmäßigen Abfluß von dem die Membrankissen 13 verlassenden Permeat 18 zu gewährleisten.

Eine zweite mehrelementige Spirale 22 wird durch Abstandselemente 23 gebildet, die derart angeordnet sind, daß die die mehrelementigen Spirale 20 bildenden Membrankissen 13 durch die besagte mehrelementige zweite Spirale 22, die durch eine Mehrzahl von Abstandselementen 23 gebildet wird, voneinander beabstandet gehalten werden. In Fig. 3 sind die Abstandselemente 23 im Gegensatz zu den Membrankissen 13 gestrichelt dargestellt.

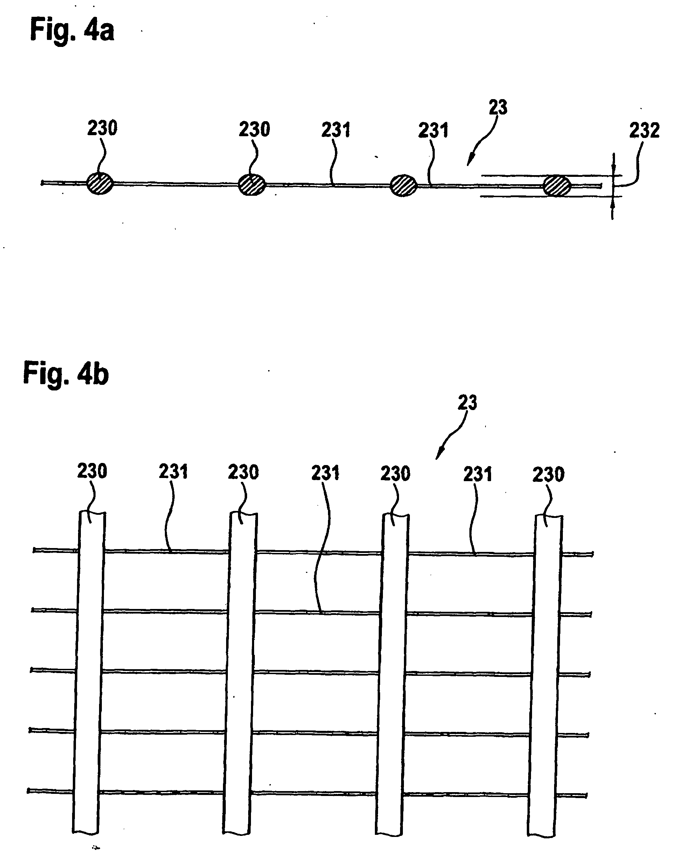

Die Abstandselemente 23, die annäherend eine Länge und eine Breite wie die Membrankissen 13 aufweisen, weisen eine gitterförmige Struktur auf, vgl. die Fig. 4a und 4b. Die Darstellungen der Abstandselemente 23 in den Fig. 4a und 4b sind zur Verdeutlichung des Aufbaus der Abstandselemente 23 vergrößert dargestellt. Die gitterförmige Struktur der Abstandselemente 23 wird durch eine Mehrzahl von sich im wesentlichen rechtwinkelig kreuzenden ersten und zweiten Elementen 230, 231 gebildet. Die Elemente 230, 231 sind stabförmig ausgebildet. Dabei sind die ersten Elemente 230 im Querschnitt größer ausgebildet als die zweiten Elemente 231. Die Abstandselemente 23 sind zur Ausbildung der mehrelementigen zweiten Spirale 22 in der Vorrichtung 10 bzw. relativ zu der mehrelementigen ersten Spirale 20 aus Membrankissen 13 derart angeordnet, daß die ersten Elemente 230 der Abstandselemente 23 im wesentlichen axial zum Rohrelement 27 bzw. zur bolzenförmigen Permeatablauf- und Sammeleinrichtung 21 ausgerichtet sind, so daß das die Spirale 20 bzw. 22 durchquerende, zu trennende Strömungsmedium 11 längs der zweiten Elemente 231 fließen kann, d.h. einen vernachlässigbar kleinen Strömungswiderstand für das zu trennende Strömungsmedium 11 bildet.

Die ersten und zweiten Elemente 230, 231 der Abstandselemente 23 weisen bei dem hier in den Fig. 4a und 4b dargestellten Ausführungsbeispiel eine im wesentlichen kreisförmige Struktur auf. Es sind aber grundsätzlich auch andere Querschnittsformen möglich, wenn bspw. gezielt eine turbulente Strömung des zu trennenden Strömungsmediums 11 beim Überfließen der Membrankissen 13 durch die mehrelementige Spirale 20 hindurch erreicht werden soll, was für speziell gewünschte Anwendungsfälle der Vorrichtung erforderlich sein kann. Die Abstandselemente 23 bestehen aus einem elastischen Werkstoff, bspw. Kunststoff, der ein elastomerer Kunststoff sein kann.

Je nach Art der mit einer bestimmten Menge von jeweils gewünschten Membrankissen 13 gebildeten Teilmenge der Membrankissen 13 kann vorgesehen werden, daß das Abstandselement 23 eine auswählbare, unterschiedliche Dikke 232 aufweist. Durch die auswählbare Dicke 232 des Abstandselementes 23 kann der jeweilige Strömungskanal für das Strömungsmedium 11 zwischen zwei angrenzenden Membrankissen 13 bestimmt werden, und zwar ebenfalls in Abhängigkeit des gewünschten Trennergebnisses des Strömungsmediums 11 und dem jeweils gewünschten Trennbereich. In einem Membranstapel 12 können somit in Abhängigkeit auch der jeweiligen Teilmengen für bestimmte Trennbereiche ausgebildeten Membrankissen 13 ebenfalls unterschiedliche Abstandselemente 23, d.h. mit unterschiedlicher Dicke 232, verwendet werden.

Wird die erste mehrelementige Spirale 20 aus Membrankissen 13 in ihre endgültige Form gebracht, vgl. die Fig. 1 und 2, schmiegen sich die zwischen den Membrankissen 13 angeordneten Abstandselemente 23 an die Oberfläche der jeweiligen benachbarten Membranelemente 133, 134 der jeweils benachbarten Membrankissen 13 an, verhindern aber, daß die jeweiligen Membranelemente 133, 134 der jeweils benachbarten Membrankissen 13 direkt aufeinanderliegen und somit einen Strömungskanal für das zu trennende Strömungsmedium 11 bilden, so daß dieses stirnseitig in die mehrelementige Spirale 20 aus Membrankissen 13 eintreten kann, vgl. Fig. 1 rechts, und nach dem Überstreichen der gesamten Länge der Membrankissen 13 aus der mehrelementigen Spirale 20 wieder austreten kann, vgl. Fig. 1 links. Durch das Vorsehen der zwischen den Membranelementen der ersten mehrelementigen Spirale 20 positionierten Abstandselemente 23, die ebenfalls die mehrelementige zweite Spirale 22 bilden, ist immerwährend ein im Strömungsquerschnitt ausreichend großer Strömungskanal für das Strömungsmedium 11 gewährleistet.

Wenn die erste und die zweite mehrelementige Spirale 20, 22, die dann bei dem hier beschriebenen Beispiel aus sechsunddreißig Elementen bestehen würde, d.h. achtzehn Membrankissen 13 und achtzehn Abstandselementen 23, in ihre endgültige aufgewickelte Stellung gebracht wird, vgl. die Fig. 1 und 2, d.h., daß die Membrankissen 13 dann unter jeweiliger Zwischenpositionierung der Abstandselemente 23 aufeinanderliegen, werden die Spiralen 20, 22 an ihrem Außenumfang 24, vgl. Fig. 2, fixiert. Dieses kann bspw. dadurch geschehen, daß die Spiralen 20, 22 dann an ihrem Außenumfang 24 mit einem fadenartigen Element oder einer Mehrzahl fadenartiger Elemente umwickelt werden. Um den Spiralen 20, 22 noch im aufgewickelten Zustand eine höhere Festigkeit zu geben, kann man die fadenartigen Elemente mit einem aushärtbaren Harz oder Kunststoff tränken. Durch geeignete Beaufschlagung von Wärme oder aber durch geeignete Einstellung des Härtevorganges des Harzes oder Kunststoffes kann dann nach erfolgter Umwickelung der Spiralen 20, 22 ein Erstarrungsvorgang der fadenartigen Elemente induziert werden. Es ist aber auch möglich, die Spiralen 20, 22. an ihrem Außenumfang 24 bspw. mittels eines Bandes aus elastomerem Werkstoff nach Art einer Spule zu umwikkeln.

Ein derart fertiggestellter Körper aus den Spiralen 20, 22, wie er bspw. in Fig. 2 dargestellt ist, wird dann auf die bolzenförmig die Vorrichtung 10 durchquerende Permeatablauf- und Sammeleinrichtung 21 geschoben. Beidseitig wird dann dieser Körper aus den mehrelementigen Spiralen 20, 22 sowie dem Rohrelement 27 mit jeweils beidseitig begrenzenden Abschlußelementen 25, 26 versehen, in denen jeweils wenigstens ein Einlaß 15 für das zu trennende Medium 11 und wenigstens ein Auslaß 17 für das Retentat 19 vorgesehen ist. Mir geeigneten Dichtmitteln sowie Überwurfhülseh werden die Abschlußelemente 25, 26 relativ zum Rohrelement 17 dichtend gehalten, wobei die Abschlußelemente 25, 26 Dichtmittel aufweisen, mit denen diese dann druckdicht gegenüber dem Gehäuse 14, vgl. Fig. 1, positioniert werden können, nachdem die Trenneinheit 110 aus den Spiralen 20, 22, der Permeatablauf- und Sammeleinrichtung 21 sowie der Abschlußelemente 25, 26 in das Gehäuse 14 eingebracht worden sind.

Die in der Vorrichtung 10 verwendeten Membrankissen 13 weisen im wesentlichen eine rechteckförmige Struktur auf, vgl. die Fig. 5.

Membrankissen 13 dieser Art sind bspw. in der EP-B-0 129 663 beschrieben und können auf bekannte Weise hergestellt werden.

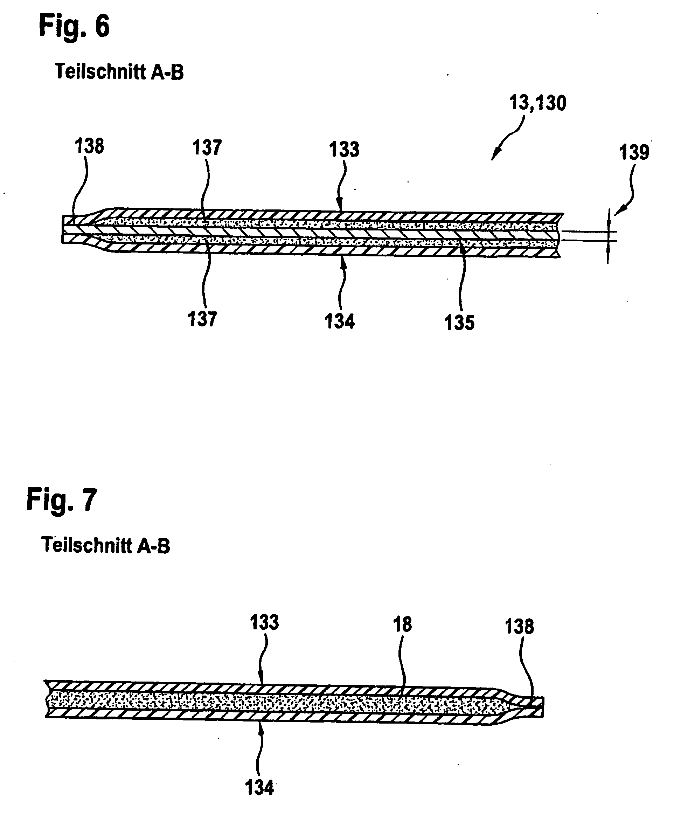

Diese Membrankissen 13 bestehen regelmäßig aus zwei Membranelementen 133, 134 und sind in der Regel aus geeignetem Polymerwerkstoff hergestellt, wobei die Polymere derart gewählt werden, daß sie an die speziell mit der Vorrichtung 10 zu bewerkstelligenden Trennaufgabe, d.h. in Abhängigkeit des zu trennenden Strömungsmediums 11, ausgewählt werden. Die beiden Membranelemente 133, 134, vgl. auch die Fig. 6 und 7, sind an ihrem umlaufenden Rand 136 auf bekannte Weise bspw. mittels Ultraschallbehandlung verschweißt oder geeignet verklebt.

Das Besondere bei dem im Zusammenhang mit der erfindungsgemäßen Vorrichtung verwendeten Membrankissen 13 ist das, daß bei dem Membrankissen 13 an einer seiner Stirnseiten 132, d.h. in einem vorbestimmten Bereich, die Permeatablauföffnung 131 ausgebildet ist, die mit den oben beschriebenen radialen Löchern 271 des Rohrelementes 27 derart fluchtet, daß das aus den Membrankissen 13 über die Permeatablauföffnung 131 austretende Permeat 18 in die radialen Löcher 271 des Rohrelements 27 eintreten kann. Im Inneren der Membrankissen 13, d.h. zwischen den das Membrankissen 13 bildenden Membranelementen 133, 134, kann wenigstens ein Zwischenelement 135 angeordnet sein, vgl. die Ausgestaltung des Membrankissens 13 gemäß Fig. 6.

Das Zwischenelement 135 kann ebenfalls eine unterschiedliche Dicke 139 aufweisen, um den zwischen den beiden stoffselektiven Membranschichten, die ein Membrankissen 13 bilden, geschaffenen Hohlraum optimal an das zu trennende Strömungsmedium 11 im Hinblick auf das in dem Membrankissen 13 anfallende Permeat 18 anzupassen. In Abhängigkeit des zu trennenden Strömungsmediums 11 mittels der Vorrichtung 10 besteht auch durch die geeignete Wahl der Dicke 139 des Zwischenelementes 135 neben der Art der Ausbildung der eigentlichen Membran und der geeignet wählbaren Dicke 232 des Abstandselements 23 ein weiterer Parameter, der wählbar ist und eine optimale Anpassung an das zu trennende Strömungsmedium 11 möglich macht. Das Zwischenelement 135 kann auch auf das Membrankissen 13 mechanisch stabilisierend wirken, wobei die Menge aller Zwischenelemente 135 den Membranstapel 12 in seiner Gesamtheit wiederum mechanisch zusätzlich stabilisieren kann.

Das Zwischenelement 135 kann eine vliesähnliche Struktur aufweisen, wodurch das Permeat leichter zur Permeatablauföffnung 131 fließen bzw. abfließen kann. Grundsätzlich ist es aber auch möglich, vgl. die Ausgestaltung des Membrankissens 13 gem. Fig. 7, zwischen den Membranelementen 133, 134 kein Zwischenelement 135 vorzusehen.

Die Vorrichtung 10 ist vorangehend im Zusammenhang mit einem Aufbau, wie er allgemein bei Spiral- bzw. Wickelmembranmodulen üblich ist, beschrieben worden. Die erfindungsgemäße Vorrichtung 10 und das erfindungsgemäße Verfahren können im Prinzip auch bei Membranstapeln 12 angewendet werden, die nach Art von Trenneinrichtungen ausgebildet sind, bei denen nach Art eines zylindrischen Stapels stapelförmig zusammengestellte Abstandselemente jeweils unter Zwischenlage je eines Membrankissens 13 vorgesehen sind, wobei eine derartige Vorrichtung beispielsweise in der EP-A-0 289 740 beschrieben worden ist.

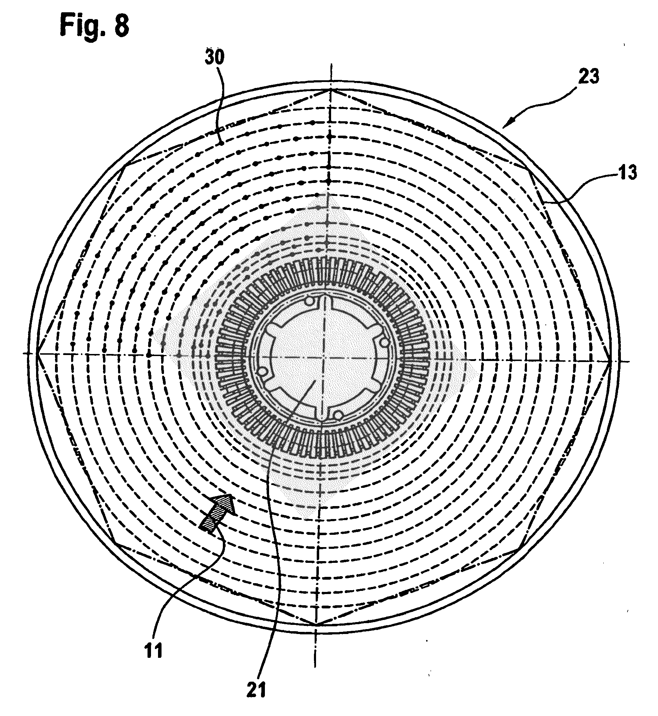

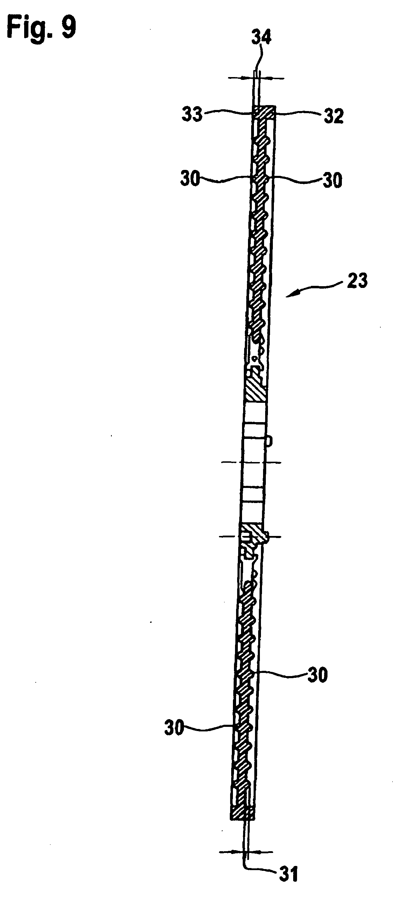

Ein derartiges scheibenförmiges Abstandselement ist beispielsweise in den Fig. 8 und 9 dargestellt, wobei das Strömungsmedium 11 einen Stapel aus Membrankissen 13 und flächenförmig ausgebildetem Abstandselement 23 von einem Einlaß für das Strömungsmedium 11 zu einem Auslaß für das Retentat mäanderförmig durchfließt. Das Permeat wird auf an sich bekannte Weise in einer zentralen Permeatablauf- und Sammeleinrichtung 21 gesammelt und über einen Auslaß für das Permeat aus der hier im einzelnen nicht dargestellten Vorrichtung herausgeführt. Das Abstandseelement 23 weist zwei Oberflächen 28, 29 auf, die im wesentlichen parallel zueinander ausgebildet sind und eine Mehrzahl von Vorsprünge 30 aufweisen, deren Höhe 31 bestimmend für den Strömungskanal für das Strömungsmedium 11 ist, der zwischen jeweils zwei Abstandselementen 23 ein Membrankissen 13 in sich einschließend gebildet wird. Ein das Abstandselement 23 beidseitig umlaufender Rand 32, 33 kann ebenfalls, entweder alternativ oder zusätzlich zur Höhe 31 der Vorsprünge 30 den Strömungsquerschnitt für das Strömungsmedium 11 beidseitig der Oberflächen des Abstandselementes 23 bestimmen. Bei einigen Ausführungsformen des Abstandselements 23, wie es im Stand der Technik bekannt ist, wird das Membrankissens 12 lediglich zwischen den Spitzen der Vorsprünge 30 gestützt, liegt auf diesen allerdings nicht auf, wohingegen bei einem anderen Abstandselement 23 das Membrankissen 13 leicht auf den parallel und eben zur Oberfläche der Abstandselemente ausgebildeten Vorsprungsflächen an der Spitze der Vorsprünge 30 aufliegt.

Generell gilt, daß die Vorrichtung 10, wie sie im Zusammenhang mit den Fig. 8 und 9 beschrieben worden ist, mit Membrankissen 13 versehen und betrieben werden kann, wie sie im Zusammenhang mit dem vorangehend beschriebenen Spiral- bzw. Wickelmembranmodul beschrieben worden ist.

Das erfindungsgemäße Verfahren wird beilspielsweise unter Heranziehung einer Vorrichtung 10, wie sie erfindungsgemäß beschrieben worden ist, derart ausgeführt, daß
das Strömungsmedium 11 mittels Membranen 13 getrennt wird, bei der die Vorrichtung 10 ein im wesentlichen druckdichtes Gehäuse 14 aufweist, in dem eine Mehrzahl von Membranen 13 angeordnet ist, und die wenigstens einen Einlaß 15 für das in die Vorrichtung geführte zu trennende Strömungsmedium 11 und wenigstens einen Auslaß 16 für das aus der Vorrichtung herausgeführte Permeat 18 sowie einen Auslaß 17 für das herausgeführte Retentat umfaßt. Die Membranen 13 sind nach Art von Membrankissen ausgebildet, die einen Öffnungsbereich 131 zum Austritt des sich im Membraninnenraum 137 sammelnden Permeats 18 aufweisen. Das Verfahren wird so geführt und die Vorrichtung 10 ist derart aufgebaut, daß jeweilige Teilmengen der Mengen der Membranen 13, die einen Membranstapel 12 bilden, für unterschiedliche Trennbereiche im Hinblick auf das zu trennende Strömungsmedium 11 ausgebildet sind.

Das Verfahren und die Vorrichtung 10 sind derart ausgebildet, daß für unterschiedliche Trennbereiche der Membranen 13 des Membranstapels 12 diese mit jeweils vorbestimmbarem, unterschiedlichem Vakuum das zu trennende Medium z.B. permeatseitig zu beaufschlagen.

### Bezugszeichenliste

- 10: Vorrichtung
- 110: Trenneinheit
- 11: Strömungsmedium
- 12: Membranstapel
- 13: Membran/Membrankissen
- 130: Ende Membrankissen
- 131: Permeatablauföffnung
- 132: Stirnseite
- 133: Membranelement
- 134: Membranelement
- 135: Zwischenelement
- 136: Bereich
- 137: Membraninnenraum
- 138: Rand
- 139: Dicke/Zwischenelement
- 14: Gehäuse
- 15: Einlaß
- 16: Auslaß Permeat
- 17: Auslaß Permeat
- 18: Permeat
- 19: Retentat
- 20: Spirale (erste)
- 21: Permeatablauf- und Sammeleinrichtung
- 210: Permeateinlauföffnung (Permeatablauf- und Sammeleinrichtung)
- 22: Spirale (zweite)
- 23: Abstandselement
- 230: stabförmiges erstes Gitterelement
- 231: stabförmiges zweites Gitterelement
- 232: Dicke/Abstandselement
- 24: Außenumfang (Spiralen)
- 25: Abschlußelement
- 26: Abschlußelement
- 27: Rohrelement
- 270: Innenbohrung
- 271: radiales Loch
- 28: Oberfläche
- 29: Oberfläche
- 30: Vorsprung
- 31: Höhe/Vorsprung
- 32: Rand
- 33: Rand
- 34: Höhe/Rand

## Patentansprüche

1. Verfahren zum Filtern und Trennen von Strömungsmedien mittels Membranen, umfassend ein druckdichtes Gehäuse, in dem eine Mehrzahl von Membranen angeordnet ist, wenigstens einen Einlaß für das in die Vorrichtung geführte zu trennende Strömungsmedium und wenigstens einen Auslaß für das aus der Vorrichtung herausgeführte Permeat sowie das herausgeführte Retentat, wobei die Membranen nach Art von Membrankissen ausgebildet sind, die einen Öffnungsbereich zum Austritt des sich im Membraninnenraum sammelnden Permeats aufweisen, **dadurch gekennzeichnet, daß** bei dem Membranstapel eine jeweilige Teilmenge der Menge der Membranen unterschiedlicher Trennbereiche mit jeweils vorbestimmtem, unterschiedlichem Vakuum permeatseitig des zu trennenden Mediums betrieben werden.

## Claims

1. Method of filtering and separating flowing media by means of membranes, comprising a pressure-tight housing in which a plurality of membranes is disposed, at least one inlet for the flowing medium to be separated fed into the device and at least one outlet for the permeate fed out of the device as well as the discharged retentate, which membranes are provided in the form of membrane pads having an opening region providing an outlet for the permeate collecting in the membrane interior, **characterised in that** in the membrane stack, a respective part-quantity of the quantity of membranes of different separation areas are operated with a predefined, different vacuum in each case on the permeate side of the medium to be separated.

## Revendications

1. Procédé de filtrage et de séparation de fluides en écoulement au moyen de membranes, comprenant un boîtier étanche à la pression, dans lequel se trouve une pluralité de membranes, au moins une entrée pour le fluide en écoulement à séparer guidé vers le dispositif et au moins une sortie pour le perméat évacué hors du fluide en écoulement ainsi que le rétentat évacué, les membranes étant conçues sous la forme de coussins à membranes, qui comprennent une zone d'ouverture pour la sortie du perméat s'accumulant à l'intérieur de la membrane, **caractérisé en ce que**, dans la pile de membranes, une partie des membranes de différentes zones de séparations sont exploitées avec un vide prédéterminé différent côté perméat du fluide à séparer.
